# EUROPEAN PATENT SPECIFICATION

(11) **EP 0 980 616 B1**
(45) Date of publication and mention of the grant of the patent: **13.10.2004**
(21) Application number: 98922157.7
(22) Date of filing: 06.05.1998
(51) Int. Cl.: H04L 29/06

(54) **NETWORK PRINTER AUTO-DETECTION METHOD AND SYSTEM**
VERFAHREN UND SYSTEM ZUR AUTOMATISCHEN ERKENNUNG VON NETZDRUCKERN
SYSTEME ET PROCEDE D'AUTODETECTION D'IMPRIMANTE DE RESEAU

(30) Priority: 08.05.1997 US 853213
(43) Date of publication of application: 23.02.2000
(73) Proprietor: Hitachi Koki Imaging Solutions, Inc., Simi Valley, CA 93063 (US)
(72) Inventor: SORKIN, Maxim, A., Canoga Park, CA 90036 (US); WELKER, Gregg, Simi Valley, CA 92065 (US); BECKSTEAD, Scott, H., Thousand Oaks, CA 91360 (US); SHAFFAR, Tal, Los Angeles, CA 90025 (US); MURPHY, Mark, P., Canoga Park, CA 91306 (US)
(74) Representative: Allman, Peter John
(86) International application number: PCT/US1998/009463
(87) International publication number: WO 1998/051054

(56) References cited:
- EP-A- 0 691 772
- US-A- 5 227 778
- US-A- 5 278 829
- US-A- 5 388 213
- ADLER R M: "DISTRIBUTED COORDINATION MODELS FOR CLIENT/SERVER COMPUTING" COMPUTER, vol. 28, no. 4, 1 April 1995, pages 14-22, XP000507856

## Description

### Background of the Invention

### 1. Field of the Invention

The present invention relates to electronic networks having a plurality of client or agent terminals or systems, and more particularly to networks having one or more printers used by computers or other printer users within the network.

### 2. History of the Prior Art

Electronic networks are known in which a plurality of client terminals or systems are coupled to the network and communicate with each other. The client terminals can comprise various types of systems such as a PC (personal computer), a printer, a router, a bridge, a tape drive, and the like.

While different types of protocols are possible for status monitoring and configuration of devices within an electronic network, one of the most common protocols is the Simple Network Management Protocol (SNMP). This is an open protocol for network management applications. The protocol is of the request-response type, and is typically carried out between a manager and an agent or client. The client may send asynchronous messages or "traps" to a management application.

In a typical electronic network, a plurality of clients in the form of computers are coupled to the network together with one or more printers and an intermediate spooler. Job requests for printing are transmitted by the client computers to the spooler which then stores spooled jobs in queues in the form of a scheduling list of print jobs to be done. The spooler then routes the job request to the printer.

Most print job requests involve one-way communication in the sense that they are sent by the sending computer to the spooler using the known address of the spooler. The spooler then controls transmission of the job request to the printer. The network address of the printer is not normally known to the sending computer, so that direct communications from the sending computer to the printer are not possible. Instead, communications from the sending computer to the printer are made by way of the spooler.

US 5,227,778 discloses a data communications network comprising a number of servers and a number of service provides. A protocol is employed for translating service names to network addresses. A server sends a multicast message to all service providers requesting a service needed by a user terminal connected to the server. In the request, the service is identified by function, rather than by address. Any node which provides this service which receives the request sends a reply message to the server, identifying said node by its network address.

US 5,388,213 discloses a method for determining whether an alias is available for use in a communication system. A transmitting node transmits a signal including the alias and if a reply signal is received, it is deduced that the alias is in use.

EP 0 691 772 discloses a system in which a terminal sends a message to a server requesting the address of another terminal. The server responds by providing the requested address.

US 5,278,829 discloses a protocol in which a terminal stores a physical address to which data is to be sent. Time elapsed after storing said physical address is recorded, and upon subsequent usage of the stored physical address the terminal tests the validity of the stored address. If the stored address is valid, the terminal transmits data to the target host, but if the physical address is no longer valid the sending host transmits a broadcast packet on to the network to resolve the physical address of the target host.

Adler RM "Distributed coordination models for client/server computing", computer, volume 28, No. 4, 1 April 1995 discussed extensions to the basic client server model that address one-to-many client/server interaction by considering how multiple services are requested, how those services are managed, and how clients receive responses.

Often, it becomes necessary or desirable to communicate directly with the printer, in order to accomplish special functions such as determining the configuration of the printer, the set-up of the printer or monitoring the printer. Where such occasions arise, it becomes necessary to determine the network address of the printer so that the sending computer can communicate directly with the printer. There are several ways of determining the network address of the printer, which are essentially manual in nature. One such technique is to contact the system administrator. The printer address can be determined by looking up the spool queue set-up notes. Alternatively, spooler specific utilities can be used to determine the network connection used by the queue to communicate with the printer. This technique requires different software for each spooler system type. Sometimes the printer address cannot be determined accurately, even with such software tools. Accordingly, it would be desirable to provide a mechanized or automated method and system within the network for determining the network address of the printer, when direct access to the printer is needed to perform specialized functions such as configuration, set-up or monitoring the printer. Such method and system should not rely upon complex hardware and should not require human intervention so as to determine the printer address such as by manual means.

According to the present invention, there is provided a method of detecting a network address of a receiving client terminal, said receiving client terminal being part of a network in which a sending client terminal transmits data via an intermediate spooling system to the receiving client terminal, the receiving client terminal receiving jobs from one or more client terminals from a job queue maintained at the intermediate spooling system, the job queue being associated with a receiving client terminal and a network address of the client receiving terminal, comprising steps of:
generating a job at the sending client terminal, the job containing a network address of the sending client terminal;
transmitting the job from the sending client terminal to the job queue maintained at the intermediate spooling system and associated with the receiving client terminal;
transmitting the job from the job queue maintained at the intermediate spooling system to the network address of the receiving client terminal;
responding to receipt of the job at the receiving client terminal by transmitting to the network address of the sending client terminal an acknowledgement which contains the network address of the receiving client terminal;
detecting and storing the network address of the receiving client terminal at the sending client terminal; and
thereafter using the stored network address of the receiving client terminal to communicate directly between the sending client terminal and the receiving client terminal.

In a more specific example of an electronic network utilizing the methods and systems of the invention, one or more clients in the form of computers are coupled through an intermediate spooler to one or more printers. To determine the network address of a printer, a non-print job request is generated by a computer and is transmitted to the spooler. The non-print job is comprised of a job header and non-print data. The job header includes the network address of the sending computer, along with job identification and other information. The non-print job is routed by the spooler to the printer. The printer acknowledges receipt of the job by transmitting an acknowledgment back to the sending computer. The acknowledgment includes the network address of the printer, as well as the job identification and other information. Because the job request includes non-print or "dummy" print data, no printing is performed at the printer. When the acknowledgment is received at the sending computer, the included network address of the printer is identified by the computer and is stored in a memory field thereof for future use. Thereafter, when the need arises to send communications directly to the printer, such as when functions like configuration, set-up or printer monitoring are to be performed, the network address of the printer is retrieved from the memory field and is used to bypass the spooler and provide direct accessing of the printer.

Where SNMP protocol is used in the network, the acknowledgments comprise traps which are generated by the printer and sent to the sending computer in the form of a string of bytes. The network address of the printer occurs at a certain known location within the string of bytes. Consequently, identification and storage of the network address of the printer is accomplished by stripping off and storing from the string of bytes of the trap those bytes defining the network address of the printer.

### Brief Description Of The Drawings

A detailed description of the invention will be made with reference to the accompanying drawings, in which:
Fig. 1 is a block diagram of an electronic network of the type in which an auto-detection method and system according to the invention can be used;
Fig. 2 is a block diagram representation of a portion of the network of Fig. 1, showing the manner in which job requests from a sending client are routed through a spooler to a receiving client terminal such as a printer, with the printer responding by sending acknowledgments back to the sending client;
Fig. 3 is a block diagram of the successive steps of a method of auto-detection of the network address of a printer, in accordance with the invention;
Fig. 4 is a representation of a non-print job which is generated and transmitted by a sending client in accordance with the invention;
Fig. 5 is a representation of an acknowledgment trap generated and transmitted by a printer to the sending client in response to the non-print job shown in Fig. 4;
Fig. 6 depicts the acknowledgment trap of Fig. 5 in the form of a byte string, and showing the manner in which a portion thereof is stripped therefrom and stored in a memory field as the network address of the printer;
Fig. 7 is a detailed block diagram of a network further illustrating the method and system in accordance with the invention; and
Fig. 8 is a still more detailed block diagram of a network further illustrating the method and system in accordance with the invention.

### Detailed Description

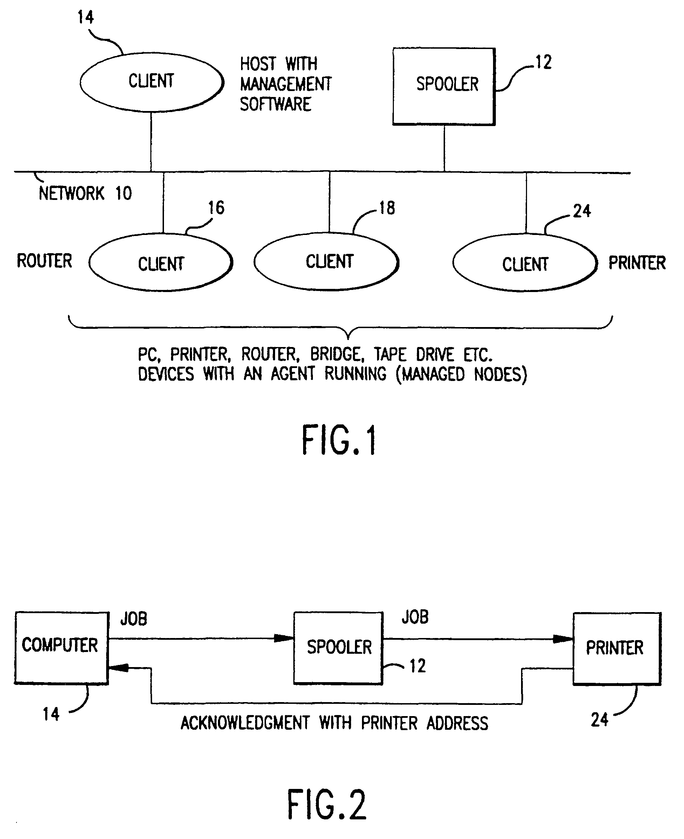

Fig. 1 shows an electronic network 10 of the type in which a method and a system in accordance with the invention may be used. In describing the network 10 of Fig. 1, as well as the other figures of drawing hereafter, the use of the Simple Network Management Protocol (SNMP) is assumed, because of its common usage in networks of this type. However, it should be understood that other interface protocols can be used in accordance with the invention.

The network 10 includes a spooler 12 and a plurality of client terminals 14, 16, 18 and 24. The clients 14, 16, 18 and 24 can comprise such systems as a PC (personal computer), a printer, a router, a bridge, a tape drive, and the like. Where one of the clients 14, 16, 18 and 24 comprises a computer and another one of the clients comprises a printer, then as described hereafter, the computer client typically transmits job requests to the printer client by way of the spooler 12.

As shown in Fig. 1, and as described hereafter, the client 14 is assumed to be a host with management software, and the clients 16, 18 and 24 are assumed to be devices with an agent running (managed nodes). The client 16 is shown in Fig. 1 as a router, while the client 24 is shown in Fig. 1 and is described hereafter in terms of a printer.

Fig. 2 depicts a portion of the network 10 which includes the client 14, the spooler 12 and the client (printer) 24. In the example of Fig. 2, the client 14 is assumed to be a computer or other system (host) capable of generating and transmitting job requests to the printer 24 by way of the spooler 12. During use of the computer 14, the need occasionally arises to have data printed. When this occurs, the computer 14 generates and transmits a job request to the spooler 12. The network address of the spooler 12 is known to the computer 14, so that the job request is sent directly to the spooler 12. Transmission of the job request to the spooler 12 utilizes a spool queue in which a schedule list is made up of jobs to be performed. The spooler 12 further processes the job request and then transmits it to the printer 24.

In accordance with the invention, the printer 24 acknowledges receipt of the job request by transmitting an acknowledgment to the client 14. The job request transmitted by the computer 14 has a job header which includes the network address of the computer 14. Consequently, the printer 24 is able to identify the job request as coming from the computer 14 and to send the acknowledgment. Where the network 10 uses the SNMP protocol, the acknowledgment takes the form of a trap in which the address of the printer 24 is included.

In the arrangement of Fig. 2, communication between the computer 14 and the printer 24 is one-way in the sense that job requests generated by the computer 14 are always first transmitted to the spooler 12. The network address of the printer 24 is known by the spooler 12 but not by the computer 14. Consequently, communications from the computer 14 to the printer 24 are by way of the spooler 12. This is satisfactory for most job requests. Often, however, it may be desirable to accomplish certain special functions such as determining the configuration, the set-up or the monitoring of the printer 24. In such instances, it is necessary for the computer 14 to be able to directly access the printer 24. However, the computer 14 does not have the network address of the printer 24.

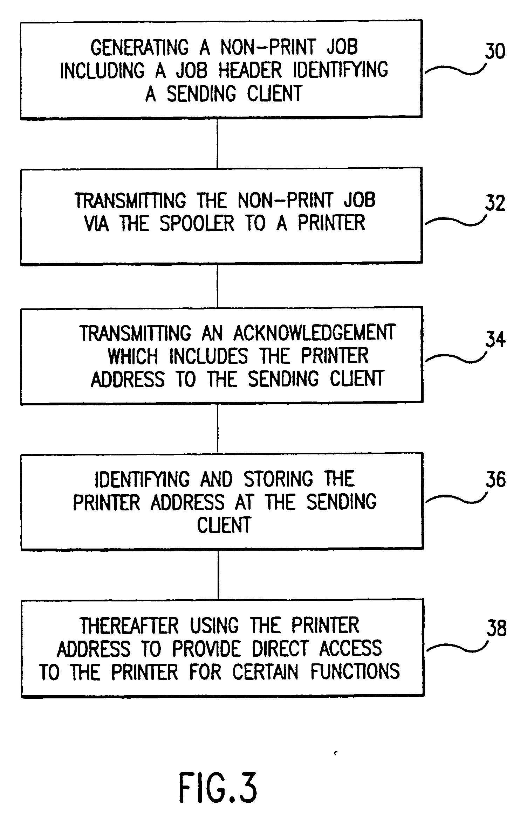

As previously noted, identification of the address of the printer 24 was previously obtained by essentially manual means such as looking up spool queue set-up notes or using complex and often unreliable software. In accordance with the invention, however, the network address of the printer 24 is automatically determined by a method and system in which a job request is communicated by the spooler 12 to the printer 24 for the purpose of returning an acknowledgment from the printer 24 to the computer 14. The acknowledgment includes the network address of the printer 24, and the computer 14 identifies and stores the network address of the printer 24. Subsequently, the network address of the printer 24 is available for direct accessing of the printer 24 by the computer 14. Such method and system are described in greater detail hereafter in connection with Figs. 3-8.

Fig. 3 shows the successive steps in a preferred method according to the invention. In a first such step 30, a non-print job is generated by the sending client such as the computer 14. The non-print job includes a job header which identifies the computer 14.

In a second step 32, the non-print job is transmitted via the spooler 12 to the printer 24, in the manner previously described.

In a third step 34, the printer 24 responds to receipt of the non-print job from the spooler 12 by transmitting an acknowledgment to the computer 14. The acknowledgment includes the network address of the printer 24.

In a fourth step 36, the computer 14 identifies and stores the network address of the printer 24. As described hereafter, the acknowledgment may comprise an SNMP trap in the form of a string of bytes, certain ones of which identify the network address of the printer 24. When the string of bytes is received at the computer 14, the bytes defining the network address of the printer 24 are detected and are stored in a memory field within the computer 14.

Thereafter, and in accordance with a fifth step 38 of Fig. 3, the stored network address of the printer 24 may be used to provide direct access by the computer 14 to the printer 24 in cases where certain functions require such direct access.

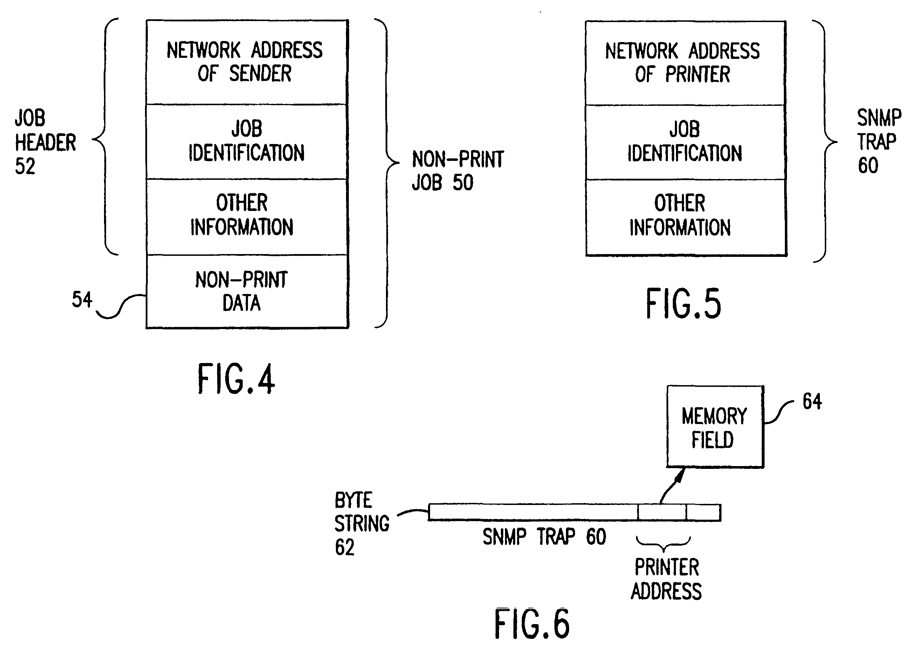

The generation and transmission of the non-print job will be better understood with reference to Fig. 4 which depicts the format of a typical non-print job 50 in accordance with the invention. The non-print job 50 includes a job header 52 together with non-print data 54. The job header 52 includes the network address of the sender, which in this case is the computer 14. There is also a job identification, and other information. The non-print data comprises "dummy" printing information in the sense that it does not result in any printing when received at the printer 24. This is because the non-print job 50 is generated and transmitted for the purpose of receiving an acknowledgment from the printer 24 so that the network address of the printer 24 can be identified and stored at the computer 14.

The printer 24 acknowledges receipt of the non-print job 50 by transmitting an acknowledgment to the computer 14. The acknowledgment is shown as an SNMP trap 60 in Fig. 5. As shown in Fig. 5, the SNMP trap 60 includes the network address of the printer 24, together with job identification and other information.

The sending computer 14 detects and stores the network address of the printer contained in the SNMP trap 60. Detection and storage of the network address of the printer 24 is illustrated in Fig. 6.

In Fig. 6, the SNMP trap 60 is shown as comprising a byte string 62. The string 62 is typically two hundred or more bytes in length. Moreover, it is known that the printer address begins at a particular byte location along the string 62. Consequently, the computer 14 detects those bytes within the string 62 which identify the printer address, and stores such bytes in a memory field 64. Thereafter, the computer 14 retrieves the network address of the printer 24 each time it is necessary to provide direct access by the computer 14 to the printer 24.

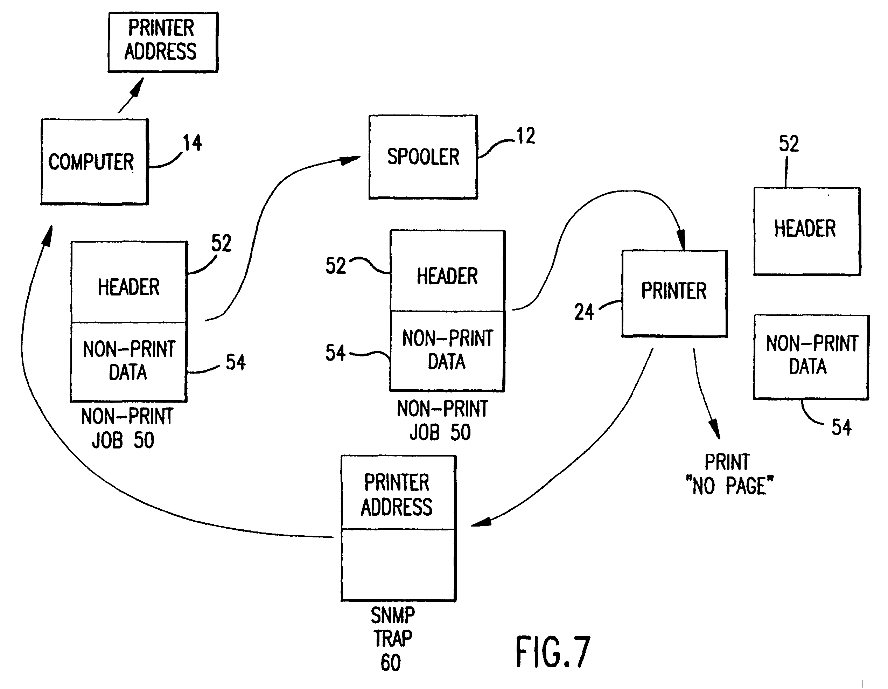

The method and system in accordance with the invention are shown in greater detail in the block diagram of Fig. 7. As shown in Fig. 7, the computer 14 begins by generating the non-print job 50, including the job header 52 and the non-print data 54. The non-print job 50 is transmitted to the spooler 12, and then by the spooler 12 to the printer 24. After examining the job header 52 and determining the information contained therein, including the network address of the sending computer 14, the job header 52 is discarded by the printer 24. The non-print or "dummy" print data 54 is examined, and a determination is made that no printing is to take place.

The printer 24 sends the acknowledgment trap 60 to the computer 14. The trap 60 includes the network address of the printer 24. As described in connection with Fig. 6, the computer 14 detects the network address of the printer 24 in accordance with the appropriate positions within the byte string 62 of the trap 60, and stores the network address of the printer 24 in the memory field 64 of the computer 14. Thereafter, the printer address may be used to achieve direct access of the printer 24 by the computer 14, when needed.

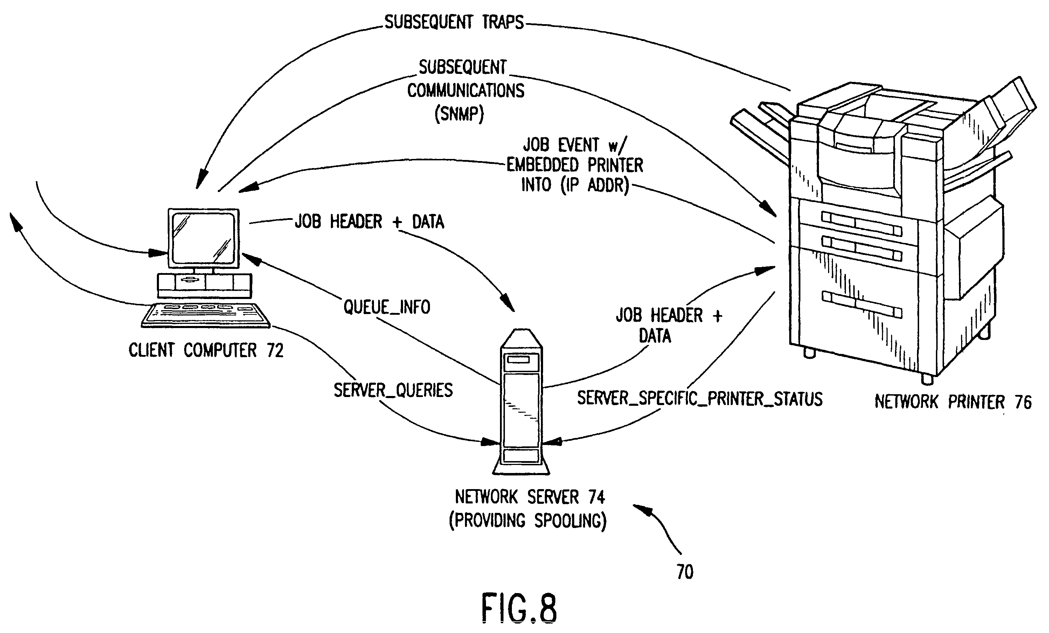

Fig. 8 provides a detailed example of a network 70 which employs a method and a system in accordance with the invention. The network 70 includes a client computer 72, a network server 74 and a network printer 76. The network server 74 provides spooling, and therefore functions as the spooler 12 in the prior figures of the drawings.

As shown in Fig. 8, the client computer 72 generates a job, which includes a job header and data, and transmits such job to the network server 74. The network server 74, in turn, sends the job header and data to the network printer 76. The network printer 76 acknowledges the job event with an acknowledgment trap that is sent to the client computer 72. Embedded in the trap is,information on the network printer 76 including particularly the network or IP (Internet) address. The client computer 72 also transmits server queries to the network server 74. The network printer 76 may transmit server specific printer status information to the network server 74. Having determined the network address of the printer 76 and stored the same in a memory field, the client computer 72 can thereafter directly access the network printer 76, when desired.

While the invention has been particularly shown and described with reference to preferred embodiments thereof, it will be understood by those skilled in the art that various changes in form and details may be made therein.

## Claims

1. A method of detecting a network address of a receiving client terminal, said receiving client terminal being part of a network (10;70) in which a sending client terminal transmits data via an intermediate spooling system to the receiving client terminal (24;76), the receiving client terminal receiving jobs from one or more client terminals from a job queue maintained at the intermediate spooling system, the job queue being associated with a receiving client terminal and a network address of the receiving client terminal, the method comprising:
generating a job (50) at the sending client terminal (14;72), the job containing a network address of the sending client terminal (14;72);
transmitting the job from the sending client terminal (14;72) to the job queue maintained at the intermediate spooling system (12;74) and associated with the receiving client terminal (24;76);
transmitting the job from the job queue maintained at the intermediate spooling system (12;74) to the network address of the receiving client terminal (24; 76);
responding to receipt of the job at the receiving client terminal (24;76) by transmitting to the network address of the sending client terminal (14;72) an acknowledgement which contains the network address of the receiving client terminal (24;76);
detecting and storing the network address of the receiving client terminal (24;76) at the sending client terminal (14;72); and
thereafter using the stored network address of the receiving client terminal (24;76) to communicate directly between the sending client terminal (14;72) and the receiving client terminal (24;76).

2. The method set forth in claim 1, wherein the step of generating a job includes the step of generating a job header (52) which includes the network address of the sending client terminal (14;72).

3. The method set forth in claim 1, wherein the acknowledgement comprises a string of bytes (62) including bytes defining the network address of the the receiving client terminal (24;76), and the step of detecting and storing comprises detecting within the string of bytes (62) the bytes defining the network address and storing the bytes defining the network address in a memory.

4. The method set forth in claim 1, wherein the receiving client terminal (24;76) comprises a printer, and the step of generating a job comprises generating a non-print job (50).

5. A method of auto-detecting a network address of a printer (24;76) for subsequent use by a computer (14;72) in directly addressing the printer (24;76), the printer (24;76) and the computer (14;72) being part of a computer network (10;70) which additionally comprises a spooler (12:74), the printer receiving jobs from the computer and computers on the network from a job queue maintained at the spooler, the job queue being associated with the printer and a network address of the printer, the method comprising:
generating a job (50) at the computer (14;72) and transmitting the job from the computer (14;72) to the spooler (12;74), the job containing a network address of the computer (14;72);
transmitting the job from the job queue maintained at the spooler (12;74) addressed to the network address of the printer (24;76);
responding to the receipt of the job at the printer (24;76) by transmitting an acknowledgement (60) from the printer (24;76) to a network address of the computer (14;72), the acknowledgement including the network address of the printer (24;76);
detecting the network address of the printer (24;76) at the computer (14;72) and storing the network address for future use by the computer;
and thereafter using the stored network address of the printer (24;76) to communicate directly from the computer (14;72) directly to the printer (24;76).

6. The method set forth in claim 5, wherein the step of generating a job includes the step of generating a job header (52) which includes the network address of the computer (14;72).

7. The method set forth in claim 5, wherein the step of generating a job (50) includes the step of generating non-print data so that when the printer (24;76) responds to the receipt of the job, no printing takes place.

8. The method set forth in claim 5, wherein the network includes simple network management protocol (SNMP) and the acknowledgement transmitted by the printer (24;76) comprises an SNMP trap.

9. The method set forth in claim 5, wherein the acknowledgement comprises a string of bytes (62), certain ones of which identify the network address of the printer (24;76), and the step of detecting and storing the network address of the printer (24;76) comprises detecting the bytes of the string of bytes (62) which identify the network address of the printer (24;76) and storing the bytes which identify the network address of the printer (24;76) in a memory field in the computer (14;72).

10. A network comprising the combination of a spooling system (12, 74) and a plurality of client terminals (14,16,18,24;72,76), a first one of the plurality of client terminals (14;72) including means for generating and transmitting data containing a network address of the first one of the plurality of client terminals to the spooling system (12;74) to be maintained in a queue at the spooling system (12;74), the queue being associated with a second one of the plurality of client terminals (24;76) and a network address associated with the second one of the plurality of client terminals (24;76), the spooling system (12;74) including means for transmitting data from the queue associated with the second one of the plurality of client terminals (24;76) addressed to the network address of the second one of the plurality of client terminals (24;76), the second one of the plurality of client terminals including means for transmitting an acknowledgement (60) to the network address of the first client terminal (14;72) in response to receipt of transmitted data (50) from the first client terminal, the acknowledgement including the network address of the second client terminal (24;76), and the first client terminal (14;72) including means responsive to receipt of the acknowledgement from the second client terminal for auto-detecting and storing the network address of the second client terminal (24;76).

11. A network in accordance with claim 10, wherein the means for generating and transmitting data via the spooling system (12/74) to a second one of the plurality of client terminals (24;76) includes means for generating a job header (52) which includes the network address of the first one of the plurality of client terminals (12;74).

12. A network in accordance with claim 10, wherein the means for auto-detecting and storing includes means for identifying a group of bytes within a string of bytes (62) of the acknowledgement (60) which comprise the network address of the second client terminal (24;76).

13. A network in accordance with claim 10, wherein the first client terminal comprises a computer (14;72) and the second client terminal comprises a printer (24;76).

14. A network in accordance with claim 13, wherein the means for generating and transmitting data via the spooling system is operative to generate and transmit a non-print job (50), and wherein the printer responds to the non-print job by transmitting the acknowledgement (60) and by not printing.

15. A network in accordance with claim 13, wherein the network includes SNMP protocol and the acknowledgement comprises an SNMP trap (60).

## Patentansprüche

1. Verfahren zur Erkennung einer Netzwerkadresse eines Empfangskundenendgerätes, wobei das Empfangskundenendgerät ein Teil eines Netzwerkes (10; 70) ist, in dem ein Sendekundenendgerät Daten über ein Zwischen-Spooling-System zum Empfangskundenendgerät (24; 76) überträgt, wobei das Empfangskundenendgerät Jobs von einem oder mehreren Kundenendgeräten aus einer Auftragswarteschlange empfängt, die im Zwischen-Spooling-System geführt wird, wobei die Auftragswarteschlange mit einem Empfangskundenendgerät und einer Netzwerkadresse des Empfangskundenendgerätes verknüpft ist, wobei das Verfahren die folgenden Schritte aufweist:
Erzeugen eines Jobs (50) am Sendekundenendgerät (14; 72), wobei der Job eine Netzwerkadresse des Sendekundenendgerätes (14; 72) enthält;
Übertragen des Jobs vom Sendekundenendgerät (14; 72) zur Auftragswarteschlange, die im Zwischen-Spooling-System (12; 74) geführt wird und mit dem Empfangskundenendgerät (24; 76) verknüpft ist;
Übertragen des Jobs von der Auftragswarteschlange, die im Zwischen-Spooling-System (12; 74) geführt wird, zur Netzwerkadresse des Empfangskundenendgerätes (24; 76);
Reagieren auf den Empfang des Jobs im Empfangskundenendgerät (24; 76) durch Übertragen einer Bestätigung, die die Netzwerkadresse des Empfangskundenendgerätes (24; 76) enthält, zur Netzwerkadresse des Sendekundenendgerätes (14; 72);
Erkennen und Speichern der Netzwerkadresse des Empfangskundenendgerätes (24; 76) im Sendekundenendgerät (14; 72); und
danach Verwenden der gespeicherten Netzwerkadresse des Empfangskundenendgerätes (24; 76), um direkt zwischen dem Sendekundenendgerät (14; 72) und dem Empfangskundenendgerät (24; 76) eine Kommunikation zu bewirken.

2. Verfahren nach Anspruch 1, bei dem der Schritt des Erzeugens eines Jobs den Schritt des Erzeugens einer Jobkopfzeile (52) umfaßt, die die Netzwerkadresse des Sendekundenendgerätes (14; 72) umfaßt.

3. Verfahren nach Anspruch 1, bei dem die Bestätigung eine Bytekette (62) aufweist, die Bytes umfaßt, die die Netzwerkadresse des Empfangskundenendgerätes (24; 76) definiert, und bei dem der Schritt des Erkennens und Speicherns das Erkennen innerhalb der Bytekette (62) von Bytes, die die Netzwerkadresse definieren, und das Speichern der Bytes aufweist, die die Netzwerkadresse in einem Speicher definieren.

4. Verfahren nach Anspruch 1, bei dem das Empfangskundenendgerät (24; 76) einen Drucker aufweist, und bei dem der Schritt des Erzeugens eines Jobs das Erzeugen eines Nichtdruckjobs (50) aufweist.

5. Verfahren zur automatischen Erkennung einer Netzwerkadresse eines Druckers (24; 76) für die anschließende Verwendung von einem Computer (14; 72) beim direkten Adressieren des Druckers (24; 76), wobei der Drucker (24; 76) und der Computer (14; 72) ein Teil eines Computemetzwerkes (10; 70) sind, das zusätzlich einen Spooler (12; 74) aufweist, wobei der Drucker Jobs vom Computer und von Computern im Netzwerk von einer Auftragswarteschlange empfängt, die im Spooler geführt wird, wobei die Auftragswarteschlange mit dem Drucker und einer Netzwerkadresse des Druckers verknüpft ist, wobei das Verfahren die folgenden Schritte aufweist:
Erzeugen eines Jobs (50) im Computer (14; 72) und Übertragen des Jobs vom Computer (14; 72) zum Spooler (12; 74), wobei der Job eine Netzwerkadresse des Computers (14; 72) enthält;
Übertragen des Jobs von der Auftragswarteschlange, die im Spooler (12; 74) geführt wird, adressiert an die Netzwerkadresse des Druckers (24; 76);
Reagieren auf den Empfang des Jobs im Drucker (24; 76) durch Übertragen einer Bestätigung (60) vom Drucker (24; 76) zu einer Netzwerkadresse des Computers (14; 72), wobei die Bestätigung die Netzwerkadresse des Druckers (24; 76) umfaßt;
Erkennen der Netzwerkadresse des Druckers (24; 76) im Computer (14; 72) und Speichern der Netzwerkadresse für eine künftige Verwendung durch den Computer; und
danach Verwenden der gespeicherten Netzwerkadresse des Druckers (24; 76), um direkt vom Computer (14; 72) direkt zum Drucker (24; 76) eine Kommunikation zu bewirken.

6. Verfahren nach Anspruch 5, bei dem der Schritt des Erzeugens eines Jobs den Schritt des Erzeugens einer Jobkopfzeile (52) umfaßt, die die Netzwerkadresse des Computers (14; 72) umfaßt.

7. Verfahren nach Anspruch 5, bei dem der Schritt des Erzeugens eines Jobs (50) den Schritt des Erzeugens von Nichtdruckdaten umfaßt, so daß, wenn der Drucker (24; 76) auf den Empfang des Jobs reagiert, kein Drucken erfolgt.

8. Verfahren nach Anspruch 5, bei dem das Netzwerk ein einfaches Netzwerkmanagementprotokoll (SNMP) umfaßt und die vom Drucker (24; 76) übertragene Bestätigung ein SNMP-Trap aufweist.

9. Verfahren nach Anspruch 5, bei dem die Bestätigung eine Bytekette (62) aufweist, wobei bestimmte von denen Bytes die Netzwerkadresse des Druckers (24; 76) identifizieren, und bei dem der Schritt des Erkennens und Speicherns der Netzwerkadresse des Druckers (24; 76) das Erkennen der Bytes der Bytekette (62), die die Netzwerkadresse des Druckers (24; 76) identifizieren, und das Speichern der Bytes aufweist, die die Netzwerkadresse des Druckers (24; 76) in einem Speicherfeld im Computer (14; 72) identifizieren.

10. Netzwerk, das die Kombination eines Spooling-Systems (12; 74) und einer Vielzahl von Kundenendgeräten (14, 16, 18, 24; 72, 76) aufweist, wobei ein erstes der Vielzahl von Kundenendgeräten (14; 72) eine Einrichtung für das Erzeugen und Übertragen von Daten, die eine Netzwerkadresse des ersten der Vielzahl von Kundenendgeräten enthalten, zum Spooling-System (12; 74) umfaßt, damit sie in einer Warteschlange im Spooling-System (12; 74) geführt werden, wobei die Warteschlange mit einem zweiten der Vielzahl von Kundenendgeräten (24; 76) und mit einer Netzwerkadresse verknüpft ist, die mit dem zweiten der Vielzahl von Kundenendgeräten (24; 76) verknüpft ist, wobei das Spooling-System (12; 74) eine Einrichtung für das Übertragen von Daten von der Warteschlange umfaßt, die mit dem zweiten der Vielzahl von Kundenendgeräten (24; 76) verknüpft ist, adressiert an die Netzwerkadresse des zweiten der Vielzahl von Kundenendgeräten (24; 76), wobei das zweite der Vielzahl von Kundenendgeräten eine Einrichtung für das Übertragen einer Bestätigung (60) zur Netzwerkadresse des ersten Kundenendgerätes (14; 72) als Reaktion auf den Empfang von übermittelten Daten (50) vom ersten Kundenendgerät umfaßt, wobei die Bestätigung die Netzwerkadresse des zweiten Kundenendgerätes (24; 76) umfaßt, und wobei das erste Kundenendgerät (14; 72) eine Einrichtung umfaßt, die auf den Empfang der Bestätigung vom zweiten Kundenendgerät für das automatische Erkennen und Speichern der Netzwerkadresse des zweiten Kundenendgerätes (24; 76) reagiert.

11. Netzwerk nach Anspruch 10, bei dem die Einrichtung für das Erzeugen und Übertragen von Daten über das Spooling-System (12; 74) zu einem zweiten der Vielzahl von Kundenendgeräten (24; 76) eine Einrichtung für das Erzeugen einer Jobkopfzeile (52) umfaßt, die die Netzwerkadresse des ersten der Vielzahl von Kundenendgeräten (12; 74) umfaßt.

12. Netzwerk nach Anspruch 10, bei dem die Einrichtung für das automatische Erkennen und Speichern eine Einrichtung für das Identifizieren einer Gruppe von Bytes innerhalb einer Bytekette (62) der Bestätigung (60) umfaßt, die die Netzwerkadresse des zweiten Kundenendgerätes (24; 76) aufweist.

13. Netzwerk nach Anspruch 10, bei dem das erste Kundenendgerät einen Computer (14; 72) und das zweite Kundenendgerät einen Drucker (24; 76) aufweist.

14. Netzwerk nach Anspruch 13, bei dem die Einrichtung für das Erzeugen und Übertragen von Daten über das Spooling-System wirksam ist, um einen Nichtdruckjob (50) zu erzeugen und zu übertragen, und bei dem der Drucker auf den Nichtdruckjob durch Übertragen der Bestätigung (60) und durch Nichtdrucken reagiert.

15. Netzwerk nach Anspruch 13, bei dem das Netzwerk das SNMP-Protokoll umfaßt und die Bestätigung ein SNMP-Trap (60) aufweist.

## Revendications

1. Procédé de détection d'une adresse de réseau d'un terminal de client récepteur, ledit terminal de client récepteur faisant partie d'un réseau (10; 70) dans lequel un terminal de client expéditeur transmet des données par l'intermédiaire d'un système de spooling intermédiaire au terminal de client récepteur (24; 76), le terminal de client récepteur recevant des travaux d'un ou de plusieurs terminaux client à partir d'une file d'attente des travaux retenue au niveau du système de spooling intermédiaire, la file d'attente des travaux étant associée à un terminal de client récepteur et à une adresse de réseau du terminal de client récepteur, le procédé comprenant les étapes ci-dessous:
production d'un travail (50) au niveau du terminal de client expéditeur (14; 72), le travail contenant une adresse de réseau du terminal de client expéditeur (14; 72);
transmission du travail du terminal de client expéditeur (14; 72) vers la file d'attente des travaux retenue au niveau du système de spooling intermédiaire (12; 74) et associée au terminal de client récepteur (24; 76);
transmission du travail de la file d'attente retenue au niveau du système de spooling intermédiaire (12; 74) vers l'adresse de réseau du terminal de client récepteur (24; 76);
réponse à la réception du travail au niveau du terminal de client récepteur (24; 76) en transmettant à l'adresse de réseau du terminal de client expéditeur (14; 72) un accusé de réception contenant l'adresse de réseau du terminal de client récepteur (24; 76);
détection et enregistrement de l'adresse de réseau du terminal de client récepteur (24; 76) au niveau du terminal de client expéditeur (14; 72); et
utilisation ultérieure de l'adresse de réseau enregistrée du terminal de client récepteur (24; 76) pour communiquer directement entre le terminal de client expéditeur (14; 72) et le terminal de client récepteur (24; 76).

2. Procédé selon la revendication 1, dans lequel l'étape de production d'un travail englobe l'étape de production d'un en-tête du travail (52) englobant l'adresse de réseau du terminal de client expéditeur (14; 72).

3. Procédé selon la revendication 1, dans lequel l'accusé de réception comprend une chaîne d'octets (62) englobant des octets définissant l'adresse de réseau du terminal de client récepteur (24; 76), l'étape de détection et d'enregistrement comprenant l'étape de détection dans la chaîne d'octets (62) des octets définissant l'adresse de réseau et d'enregistrement des octets définissant l'adresse de réseau dans une mémoire.

4. Procédé selon la revendication 1, dans lequel le terminal de client récepteur (24; 76) comprend une imprimante, l'étape de production d'un travail comprenant l'étape de production d'un travail de non impression (50).

5. Procédé de détection automatique d'une adresse de réseau d'une imprimante (24; 76) en vue d'une utilisation ultérieure par un ordinateur (14; 72) en adressant directement l'imprimante (24; 76), l'imprimante (24; 76) et l'ordinateur (14; 72) faisant partie d'un réseau d'ordinateurs (10, 70) comprenant en plus un spooler (12; 74), l'imprimante recevant les travaux de l'ordinateur et des ordinateurs sur le réseau à partir d'une file d'attente des travaux retenue au niveau du spooler, la file d'attente des travaux étant associée à l'imprimante et à une adresse de réseau de l'imprimante, le procédé comprenant les étapes ci-dessous:
production d'un travail (50) au niveau de l'ordinateur (14; 72) et transmission du travail de l'ordinateur (14; 72) vers le spooler (12; 74), le travail contenant une adresse de réseau de l'ordinateur (14; 72);
transmission du travail de la file d'attente des travaux retenue au niveau du spooler (12; 74) vers l'adresse de réseau de l'imprimante (24; 76);
réponse à la réception du travail au niveau de l'imprimante (24; 76) en transmettant un accusé de réception (60) de l'imprimante (24; 76) à une adresse de réseau de l'ordinateur (14; 72), l'accusé de réception englobant l'adresse de réseau de l'imprimante (24; 76);
détection de l'adresse de réseau de l'imprimante (24; 76) au niveau de l'ordinateur (14; 72) et enregistrement de l'adresse de réseau en vue d'une utilisation future par l'ordinateur; et
utilisation ultérieure de l'adresse de réseau enregistrée de l'imprimante (24; 76) pour communiquer directement entre l'ordinateur (14; 72) et l'imprimante (24; 76).

6. Procédé selon la revendication 5, dans lequel l'étape de production d'un travail englobe l'étape de production d'un en-tête du travail (52) englobant une adresse de réseau de l'ordinateur (14; 72).

7. Procédé selon la revendication 5, dans lequel l'étape de production d'un travail (50) englobe l'étape de production de données de non impression, de sorte que lorsque l'imprimante (24; 76) répond à la réception du travail, il n'y a pas d'impression.

8. Procédé selon la revendication 5, dans lequel le réseau englobe un protocole de gestion du réseau simple (SNMP), l'accusé de réception transmis par l'imprimante (24; 76) comprenant un déroutement SNMP.

9. Procédé selon la revendication 5, dans lequel l'accusé de réception comprend une chaîne d'octets (62), dont certains identifient l'adresse de réseau de l'imprimante (24; 76), l'étape de détection et d'enregistrement de l'adresse de réseau de l'imprimante (24; 76) comprenant l'étape de détection des octets de la chaîne d'octets (62) identifiant l'adresse de réseau de l'imprimante (24; 76) et d'enregistrement des octets identifiant l'adresse de réseau de l'imprimante (24; 76) dans un champ de mémoire dans l'ordinateur (14; 72).

10. Réseau comprenant la combinaison d'un système de spooling (12, 74) et de plusieurs terminaux client (14, 16, 18, 24; 72, 76), un premier des plusieurs terminaux client (14; 72) englobant un moyen pour produire et transmettre des données contenant une adresse de réseau du premier des plusieurs terminaux client vers le système de spooling (12; 74) en vue de la mise sur une file d'attente au niveau du système de spooling (12; 74), la file d'attente étant associée à un deuxième des plusieurs terminaux client (24; 76) et à une adresse de réseau associée au deuxième des plusieurs terminaux client (24; 76), le système de spooling (12; 74) englobant un moyen pour transmettre les données de la file d'attente associée au deuxième des plusieurs terminaux client (24; 76) adressée à l'adresse de réseau du deuxième des plusieurs terminaux client (24; 76), le deuxième des plusieurs terminaux client englobant un moyen pour transmettre un accusé de réception (60) à l'adresse de réseau du premier terminal client (14; 72) en réponse à la réception des données transmises (50) par le premier terminal client, l'accusé de réception englobant l'adresse de réseau du deuxième terminal client (24; 76) et le premier terminal client (14; 72) englobant un moyen répondant à la réception de l'accusé de réception du deuxième terminal client en vue d'une détection automatique et d'un enregistrement de l'adresse de réseau du deuxième terminal client (24; 76).

11. Réseau selon la revendication 10, dans lequel le moyen destiné à produire et à transmettre les données par l'intermédiaire du système de spooling (12; 74) vers un deuxième des plusieurs terminaux client (24; 76) englobe un moyen pour produire un en-tête du travail (52) englobant l'adresse de réseau du premier des plusieurs terminaux client (12; 74).

12. Réseau selon la revendication 10, dans lequel le moyen de détection automatique et d'enregistrement englobe un moyen pour identifier un groupe d'octets dans une chaîne d'octets (62) de l'accusé de réception (60) comprenant l'adresse de réseau du deuxième terminal client (24; 76).

13. Réseau selon la revendication 10, dans lequel le premier terminal client est constitué par un ordinateur (14; 72), le deuxième terminal client étant constitué par une imprimante (24; 76).

14. Réseau selon la revendication 13, dans lequel le moyen destiné à produire et à transmettre des données par l'intermédiaire du système de spooling est destiné à produire et à transmettre un travail de non impression (50), l'imprimante répondant au travail de non impression en transmettant l'accusé de réception (60) et en ne faisant pas d'impression.

15. Réseau selon la revendication 13, dans lequel le réseau englobe un protocole SNMP, l'accusé de réception comprenant un déroutement SNMP (60).
